# EUROPÄISCHE PATENTSCHRIFT

(11) **EP 3 653 032 B1**
(45) Veröffentlichungstag und Bekanntmachung des Hinweises auf die Patenterteilung: **10.08.2022**
(21) Anmeldenummer: 19210138.4
(22) Anmeldetag: 19.11.2019
(51) Int. Cl.: A01B 39/08, A01B 39/18, A01D 34/66, A01D 34/835, A01M 21/02

(54) **VORRICHTUNG ZUM ENTFERNEN UND ZERKLEINERN, INSBESONDERE MULCHEN VON UNKRAUT, UNTERSAATEN ODER DERGLEICHEN**
DEVICE FOR REMOVING AND SHREDDING, ESPECIALLY MULCHING WEEDS, UNDERSAWN CROPS OR THE LIKE
DISPOSITIF D'ÉLIMINATION ET DE BROYAGE, EN PARTICULIER DE PAILLAGE DE MAUVAISES HERBES, CULTURES DÉROBÉES OU ANALOGUES

(30) Priorität: 19.11.2018 AT 3472018
(43) Veröffentlichungstag der Anmeldung: 20.05.2020
(73) Patentinhaber: Rohringer, Werner, 2154 Gaubitsch (AT)
(72) Erfinder: Rohringer, Werner, 2154 Gaubitsch (AT); Rossak, Johann, 2132 Hörersdorf (AT)
(74) Vertreter: Patentanwaltskanzlei Matschnig & Forsthuber OG

(56) Entgegenhaltungen:
- DE-C1- 3 830 141
- FR-A- 1 346 913
- US-A1- 2018 007 834
- US-A1- 2018 288 939

## Beschreibung

Die vorliegende Erfindung bezieht sich auf eine Vorrichtung zum Entfernen und Zerkleinern, insbesondere Mulchen von Unkraut, Untersaaten oder dgl. zwischen in Reihen angepflanzten Kulturpflanzen, mit einer Mehrzahl von einzelnen Pflanzenreihen zugeordneten Werkzeugen, welche an einem Träger eines landwirtschaftlichen Fahrzeugs gelagert sind.

Im Zusammenhang mit einer Entfernung und Zerkleinerung von Unkraut, Untersaaten oder dgl. zwischen in Reihen angepflanzten Kulturpflanzen ist es bekannt, durch entsprechende Bodenbearbeitungsgeräte derartige nicht erwünschte Pflanzen zwischen den Kulturpflanzen zu entfernen, wobei üblicherweise Hackgeräte oder ähnliche Vorrichtungen zum Einsatz gelangen, wie dies beispielsweise der FR-Al 2 812 790, der US 2018/007834 A1, der DE 3830141 C1 oder der EP-A2 0 914 760 zu entnehmen ist. Bei derartigen Hackgeräten wird neben einer Beseitigung der unerwünschten Pflanzen die oberste Schicht des Bodens zerkleinert bzw. abgehoben, so dass beispielsweise bei einem nachfolgenden Starkregen oder Gewitter insbesondere bei in Hanglagen befindlichen Böden eine starke Bodenerosion auftritt. Eine derartige Bodenerosion verfrachtet nicht nur wertvollen Ackerboden, sondern bedroht gegebenenfalls auch anschließende Siedlungsräume, wobei durch die Entfernung der obersten und üblicherweise fruchtbarsten Bodenschicht auch entsprechende wirtschaftliche Schäden für eine Nutzung von derartigem Ackerboden in weiteren Jahren unvermeidbar werden.

Die vorliegende Erfindung zielt daher darauf ab, die oben genannten Nachteile bestehender Vorrichtungen zur Entfernung von unerwünschten Pflanzen zwischen in Reihen angepflanzten Kulturpflanzen zu vermeiden und insbesondere die nachteiligen Auswirkungen einer Bodenerosion, wie sie durch den Einsatz von bekannten Hackgeräten oder ähnlichen Vorrichtungen auftreten, zu vermeiden bzw. wenigstens weitestgehend zu reduzieren.

Zur Lösung dieser Aufgaben ist eine Vorrichtung nach Anspruch 1 vorgeschlagen, welche im Wesentlichen dadurch gekennzeichnet ist, dass die einzelnen Werkzeuge, welche jeweils wenigstens ein rotierendes Messer aufweisen, jeweils um eine im Wesentlichen horizontale und in Fahrtrichtung des Fahrzeugs und in Richtung der im Wesentlichen parallel zueinander verlaufenden Pflanzenreihen orientierte Schwenkachse verlagerbar geführt sind. Erfindungsgemäß wird somit vorgeschlagen, dass die beispielsweise an einem Träger eines landwirtschaftlichen Fahrzeugs gelagerten Werkzeuge jeweils von einem Messer gebildet sind, welches zu einem Zerkleinern und Mulchen von Unkraut, Untersaaten oder dgl. zwischen den in Reihen angepflanzten Kulturpflanzen dient, wobei die von Messern gebildeten Werkzeuge diese unerwünschten Pflanzen zwischen den Kulturpflanzen knapp oberhalb des Bodens schneiden bzw. zerkleinern und derart die oberste Bodenschicht im Gegensatz zu bekannten Hackeinrichtungen unberührt lassen. Für eine Anpassung und im Wesentlichen vollständige Entfernung von zwischen den einzelnen Pflanzenreihen wachsenden und zu entfernenden unerwünschten Pflanzen ist erfindungsgemäß vorgesehen, dass die einzelnen Werkzeuge jeweils um eine im Wesentlichen horizontale und in Fahrtrichtung des Fahrzeugs und in Richtung der im Wesentlichen parallel zueinander verlaufenden Pflanzenreihen orientierte Schwenkachse verlagerbar geführt sind, so dass derart möglich wird, selbst bei einer gegebenenfalls nicht unmittelbar und vollständig parallel zu den Pflanzenreihen erfolgenden Fahrt bzw. Bewegung des landwirtschaftlichen Fahrzeugs durch derartige Schwenk- bzw. Ausgleichsbewegungen zwischen den einzelnen Werk- zeugen zuverlässig lediglich die zwischen den Pflanzenreihen zu entfernenden unerwünschten Pflanzen zu zerkleinern und zu entfernen bzw. zu mulchen. Durch die erfindungsgemäß vorgeschlagene Zerkleinerung bzw. das Mulchen der unerwünschten Pflanzen zwischen den Kulturpflanzen wird neben einem Schutz der obersten Bodenschicht zur Vermeidung einer Bodenerosion insbesondere gleichzeitig eine entsprechende Düngung durch die zerkleinerten Pflanzen erzielt. Neben einer derartigen Verbesserung der Bodenfruchtbarkeit durch einen Humusaufbau unterdrücken die zer-kleinerten bzw. gemulchten Pflanzen ein neuerliches Wachstum von Unkraut, Untersaaten oder dgl. Zusätzlich wird durch die sich dadurch ergebende Bodenbeschattung eine Bodenerwärmung reduziert, so dass durch eine derartige Reduktion der Bodentemperatur auch das Überleben bzw. die Tätigkeit von Bodenlebewesen begünstigt wird. Ergänzend wird Niederschlag vom Boden besser aufgenommen und es wird insbesondere das Auftreten einer Bodenerosion durch ein

Abtragen der obersten Bodenschicht bei Starkregen oder Gewitter verhindert bzw. zumindest deutlich reduziert.

Für eine konstruktiv besonders zuverlässige und einfache Ausführungsform wird darüber hinaus vorgeschlagen, dass jeweils wenigstens ein Werkzeug an oder in einem Werkzeughalter gelagert ist, welcher bewegbar am Träger angelenkt ist, wie dies einer bevorzugten Ausführungsform der erfindungsgemäßen Vorrichtung entspricht. Ein derartiger Werkzeughalter, an welchem jeweils wenigstens ein Werkzeug gelagert ist, wobei ein derartiger Werkzeughalter beispielsweise auch mit einer entsprechenden Antriebsvorrichtung für das von einem Messer gebildete Werkzeug versehen sein kann, lässt sich entsprechend zuverlässig am Träger anlenken, so dass durch den am Träger angelenkten Werkzeughalter eine zuverlässige Führung des Werkzeugs zwischen den Pflanzenreihen möglich wird.

Zur Verbesserung der Führung der Werkzeuge bzw. deren Werkzeughalter zwischen den Pflanzenreihen wird gemäß einer weiters bevorzugten Ausführungsform vorgeschlagen, dass die Werkzeuge bzw. deren Werkzeughalter insbesondere mittels seitlicher Leiteinrichtungen, insbesondere Leitbleche an ihren Außenumfängen in Fahrtrichtung des Fahrzeugs durch die Pflanzen der Pflanzenreihen geführt sind. Durch derartige Leiteinrichtungen bzw. Leitbleche lassen sich die einzelnen Werkzeuge an den Pflanzen der Pflanzenreihen sicher und zuverlässig führen, wobei durch eine entsprechende Formgebung der Leiteinrichtungen die Pflanzen entsprechend geschützt werden. Durch eine Anpassung der Werkzeuge bzw. deren Werkzeughalter an den vorgegebenen Abstand der Pflanzenreihen wird insgesamt eine sichere und zuverlässige Entfernung der zwischen den Pflanzenreihen wachsenden, unerwünschten Pflanzen, wie beispielsweise Unkraut, Untersaaten oder dgl. möglich.

Für eine zuverlässige Auflage der Leiteinrichtungen auf einem gegebenenfalls unebenen Untergrund wird darüber hinaus vorgeschlagen, dass die Leiteinrichtungen zu dem zugehörigen Werkzeughalter heb- und senkbar insbesondere zur Auflage an der Bodenoberfläche angelenkt sind, wie dies einer weiters bevorzugten Ausführungsform der erfindungsgemäßen Vorrichtung entspricht.

Zur Verbesserung der Führung der Leiteinrichtungen sowie zum Schutz der in den Pflanzenreihen angebauten bzw. angepflanzten Kulturpflanzen ist gemäß einer weiters bevorzugten Ausführungsform vorgesehen, dass die Leiteinrichtungen an ihren in Fahrtrichtung vorderen Endbereichen mit im Wesentlichen einwärts zu einem mittigen Bereich des Werkzeugs bzw. Werkzeughalters sowie insbesondere aufwärts von der Bodenoberfläche gerichteten Enden ausgebildet sind. Durch derart im Wesentlichen einwärts zu einem mittigen Bereich des Werkzeugs bzw. Werkzeughalters sowie insbesondere aufwärts gerichtete Enden werden die Kulturpflanzen entsprechend geschützt. Weiters ermöglichen derartige aufragende Enden beispielsweise bei insbesondere im Bodenbereich wachsenden Pflanzen, wie beispielsweise Rüben, ein Anheben der Blätter dieser Kulturpflanze, damit diese nicht wie die zwischen den Reihen zu entfernenden Pflanzen durch die Werkzeuge ebenfalls entfernt bzw. zerkleinert werden.

Insbesondere zur Einhaltung eines im Wesentlichen gleichmäßigen vertikalen Abstands der Messer der Werkzeuge zu einer gegebenenfalls nicht gleichmäßigen bzw. ebenen Bodenoberfläche, um derart ein im Wesentlichen gleichmäßiges Entfernen bzw. Schneiden der zu entfernenden Pflanzen zu ermöglichen, wird darüber hinaus vorgeschlagen, dass die Werkzeuge bzw. deren Werkzeughalter zusätzlich in vertikaler Richtung, vorzugsweise mittels eines Tastrades zur Einhaltung eines im Wesentlichen vorbestimmten bzw. vorbestimmbaren Abstands zu der Bodenoberfläche bewegbar sind, wie dies einer weiters bevorzugten Ausführungsform der erfindungsgemäßen Vorrichtung entspricht. Durch ein derartiges Tastrad wird somit jeweils ein im Wesentlichen gleichbleibender vertikaler Abstand der Messer bzw. Werkzeuge von der Bodenoberfläche erzielbar, so dass beispielsweise auch Hanglagen mit einer Mehrzahl von an einem Träger angeordneten Werkzeugen bzw. deren Werkzeughalter bei im Wesentlicher unveränderter Lagerung eines derartigen Trägers an einem landwirtschaftlichen Fahrzeug bearbeitet werden können.

Für die Erzielung zuverlässiger Schwenk- bzw. Verlagerungsbewegungen in gegebenenfalls einer Mehrzahl von Schwenk- bzw. Bewegungsrichtungen bzw. um eine Mehrzahl von Schwenkachsen, wie dies oben ausgeführt ist, wird gemäß einer weiters bevorzugten Ausführungsform vorgeschlagen, dass die Schwenkbewegungen bzw. Verlagerungsbewegungen der Werkzeuge bzw. Werkzeughalter über eine Mehrzahl von zwischen dem Träger und jeweils einem Werkzeughalter der einzelnen Werkzeuge angeordneten Parallelogrammlenkern gebildet sind. Derartige Parallelogrammlenker lassen sich auch entsprechend robust und zuverlässig ausführen und ermöglichen eine zuverlässige mechanische Führung der einzelnen Werkzeuge bzw. deren Werkzeughalter insbesondere an den in Reihen angepflanzten Kulturpflanzen.

Zur weiteren Erhöhung der Einsetzbarkeit der erfindungsgemäßen Vorrichtung wird gemäß einer weiters bevorzugten Aus- führungsform vorgeschlagen, dass die Werkzeuge bzw. Werkzeughalter zusätzlich um eine im Wesentlichen vertikale Achse verschwenkbar relativ zu dem Träger gelagert sind. Eine derartige zusätzliche Verschwenkbarkeit um eine im Wesentlichen vertikale Achse erlaubt beispielsweise auch entsprechende Kurvenfahrten bzw. eine Bearbeitung von Pflanzenreihen, welche nicht vollständig geradlinig gepflanzt sind.

Für eine Anpassung der erfindungsgemäßen Vorrichtung zum Einsatz bei gegebenenfalls unterschiedlichen Kulturpflanzen oder in unterschiedlichen Abständen gepflanzten Kulturpflanzen wird darüber hinaus vorgeschlagen, dass die Breite der Werkzeuge bzw. Werkzeughalter in Fahrtrichtung in Anpassung an einen Abstand zwischen einzelnen Pflanzenreihen eingestellt oder einstellbar ist, wie dies einer weiters bevorzugten Ausführungsform der erfindungsgemäßen Vorrichtung entspricht.

Zur weiteren Anpassung an gegebenenfalls unterschiedliche Einsatzbedingungen, beispielsweise für einen Einsatz an schräg zu den jeweiligen Pflanzenreihen verlaufenden Enden einer bepflanzten Bodenfläche, wird gemäß einer weiters bevorzugten Aus- führungsform vorgeschlagen, dass jedes Werkzeug bzw. jeder Werkzeughalter getrennt anhebbar und absenkbar an dem Träger, insbesondere unter Zwischenschaltung eines Zylinder-Kolben-Aggregats gelagert ist. Durch ein derartig getrennt mögliches Anheben und Absenken einzelner Werkzeuge bzw. Werkzeughalter können einzelne Werkzeuge beispielsweise bei Erreichen einer Boden- bzw. Grundstücksfläche angehoben werden, während mit verbleibenden Werkzeugen beispielsweise an einem anderen Ende des Trägers liegende Pflanzenreihen bis zum Ende der Bodenfläche entsprechend bearbeitet werden können.

Gemäß einer weiters bevorzugten Ausführungsform ist vorgesehen, dass die Werkzeuge bzw. Werkzeughalter an einem in Fahrtrichtung des landwirtschaftlichen Fahrzeugs vor diesem angeordneten Träger angeordnet bzw. festgelegt sind. Derart erfolgt eine Bearbeitung, insbesondere Entfernung und Zerkleinerung von zu entfernenden Pflanzen zwischen den Kulturpflanzen vor dem landwirtschaftlichen Fahrzeug, so dass, beispielsweise im Gegensatz zu einer Anordnung eines Trägers mit den Werkzeugen hinter dem landwirtschaftlichen Fahrzeug, die zu entfernenden bzw. zu zerkleinernden Pflanzen nicht vorher durch die Räder des landwirtschaftlichen Fahrzeugs niedergedrückt werden, so dass eine entsprechende Entfernung und Zerkleinerung erschwert bzw. unmöglich gemacht wird.

Da üblicherweise Abstände an Randbereichen von bepflanzten Bodenflächen einen geringeren Abstand der in Reihen angepflanzten Kulturpflanzen zu einer derartigen Begrenzungsfläche als den Abstand zwischen den einzelnen Pflanzenreihen aufweisen und unter Berücksichtigung der Tatsache, dass großflächige Bodenflächen üblicherweise durch ein mehrmaliges Befahren mit einem landwirtschaftlichen Fahrzeug bearbeitet werden, wird gemäß einer weiters bevorzugten Ausführungsform vorgeschlagen, dass an außen liegen- den Enden des Trägers angeordnete Werkzeuge bzw. Werkzeughalter eine gegenüber dem Abstand der Pflanzenreihen sowie der Breite der übrigen Werkzeuge verringerte Breite aufweisen. Durch derartige Werkzeuge bzw. Werkzeughalter mit verringerter Breite an den Außenbereichen wird ermöglicht, gegebenenfalls schmälere Randbereiche ebenfalls zu bearbeiten, und/oder wird berücksichtigt, dass bei einem neuerlichen Bearbeiten mit dem landwirtschaftlichen Fahrzeug von anschließenden bepflanzten Bereichen ein verbleibender Teilbereich zwischen am Rand befindlichen Reihen von Kulturpflanzen durch das neuerliche Bearbeiten der anschließenden Bereiche entsprechend behandelt wird.

Die Erfindung wird nachfolgend anhand eines in der beiliegenden Zeichnung schematisch dargestellten Ausführungsbeispiels näher erläutert. In dieser zeigen:
Fig. 1 eine schematische Draufsicht auf eine Ausführungsform einer erfindungsgemäßen Vorrichtung, welche an einem landwirtschaftlichen Fahrzeug gelagert ist;
Fig. 2 eine schematische Detailansicht der Aufhängung bzw. Anlenkung von Teilen einer erfindungsgemäßen Vorrichtung an dem am landwirtschaftlichen Fahrzeug gelagerten Träger;
Fig. 3a eine Draufsicht in Richtung des Pfeils IIIa der Fig. 2, wobei zusätzliche Details dargestellt sind;
Fig. 3b eine Detailansicht der Lagerung eines Werkzeugs bzw. Werkzeughalters der erfindungsgemäßen Vorrichtung, welche eine Schwenk- bzw. Verschiebebewegung eines Werkzeugs um eine im Wesentlichen horizontale und in Fahrtrichtung des landwirtschaftlichen Fahrzeugs verlaufende Achse ermöglicht;
Fig. 4a in einer Darstellung entsprechend Fig. 3a eine schematische Draufsicht, wobei die dargestellten Elemente der erfindungsgemäßen Vorrichtung um die horizontale und in Fahrtrichtung verlaufende Achse verschwenkt sind;
Fig. 4b eine Detailansicht ähnlich der Darstellung gemäß Fig. 3b, wobei die verschwenkte Anordnung bzw. Lagerung eines Werkzeugs angedeutet ist;
Fig. 5 eine Draufsicht auf ein Werkzeug bzw. einen Werkzeughalter einer erfindungsgemäßen Vorrichtung, wobei zusätzlich zu Details gemäß den Darstellungen gemäß Fig. 3a und 4a auch ein von einem Messer gebildetes Werkzeug gezeigt ist und das Werkzeug bzw. der Werkzeughalter neben einem Versatz relativ zu der Mittellinie beispielsweise entsprechend Fig. 4a auch bei einer Kurvenfahrt gezeigt ist;
Fig. 6 eine Draufsicht ähnlich der Darstellung gemäß Fig. 5, wobei zusätzlich an den Außenbereichen vorgesehene Leiteinrichtungen, insbesondere Leitbleche gezeigt sind;
Fig. 7a und 7b die Anordnung von seitlichen Leiteinrichtungen in unterschiedlicher relativer Lage zu einem von einem Messer gebildeten Werkzeug entsprechend einer Ansicht in Richtung des Pfeils VII von Fig. 6; und
Fig. 8a, 8b und 8c eine Darstellung der Vorrichtung entgegen der Bearbeitungsrichtung, also aus Sicht des noch unbearbeiteten Feldes.

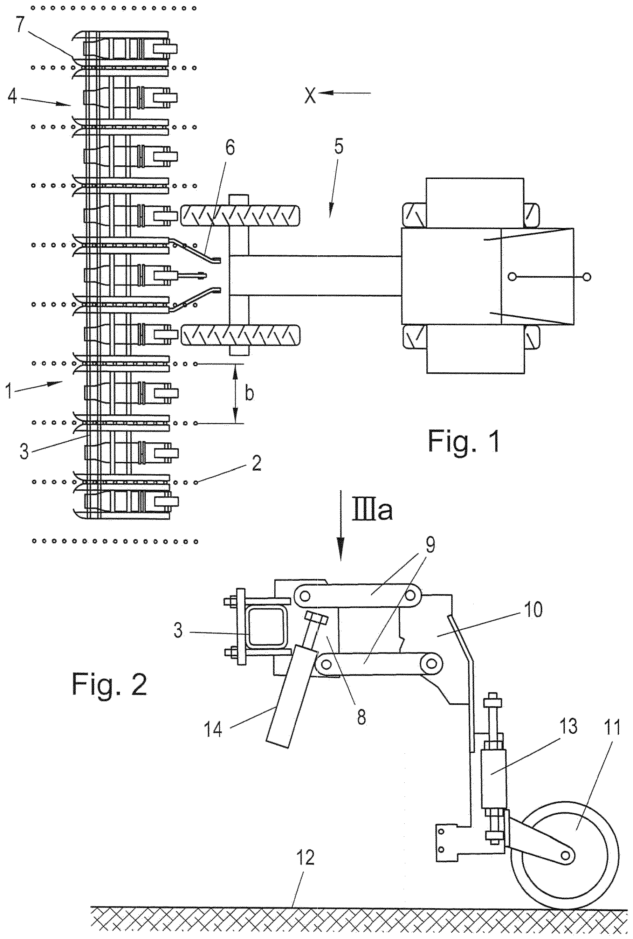

In **Fig. 1** ist mit **1** eine Vorrichtung zum Entfernen und Zerkleinern, insbesondere Mulchen von Unkraut, Untersaaten oder dgl. gezeigt, wobei in Reihen angepflanzte Kulturpflanzen schematisch mit **2** angedeutet sind. Die gesamte Vorrichtung **1** ist an einem Träger **3** gelagert, wobei eine Mehrzahl von jeweils mit **4** bezeichneten Einheiten ersichtlich ist, mit welchen, wie dies aus den nachfolgenden Figuren deutlicher ersichtlicher werden wird, eine entsprechende Entfernung und Zerkleinerung von zwischen den in Reihen gepflanzten Kulturpflanzen **2** wachsendem Unkraut, Untersaaten oder dgl. möglich wird.

Die gesamte Vorrichtung **1** ist an einem schematisch mit **5** bezeichneten landwirtschaftlichen Fahrzeug, beispielsweise Traktor gelagert, wobei hierfür eine insbesondere heb- und senkbare Gelenkverbindung **6** angedeutet ist. Für einen Transport der Vorrichtung **1** kann die gesamte Vorrichtung in an sich bekannter Weise über die Gelenkverbindung **6** angehoben werden, wobei zusätzlich beispielsweise durch entsprechende, nicht näher dargestellte Gelenkverbindungen **6** an dem Träger **3** ein Einklappen von Seitenbereichen der Vorrichtung **1** für eine geringere Transportbreite erfolgen kann, wobei dies jedoch nicht im Detail gezeigt ist.

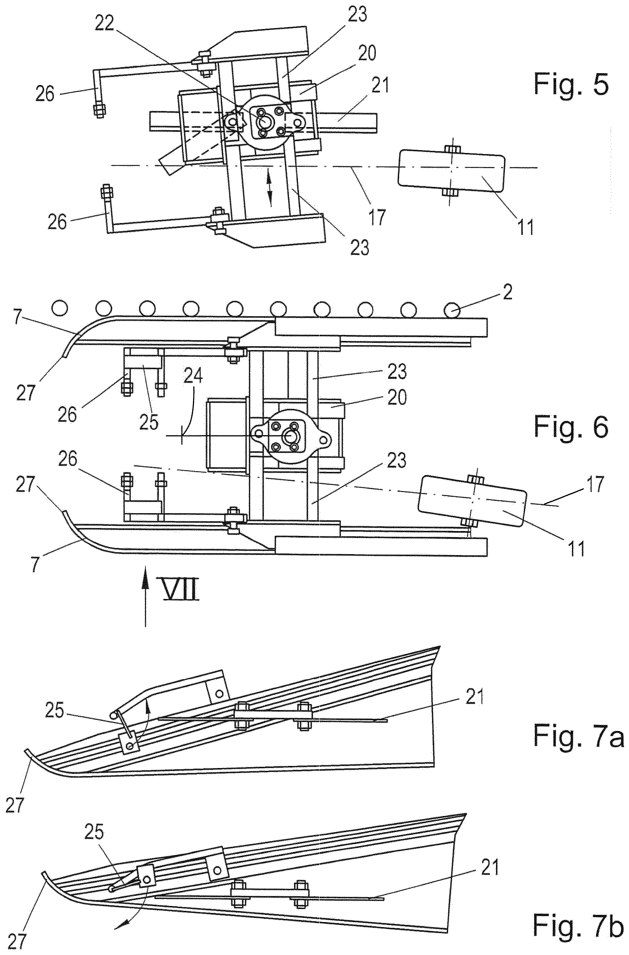

Aus der schematischen Darstellung von **Fig. 1** ist weiters ersichtlich, dass die Breite **b** jeder Einheit **4** im Wesentlichen dem Abstand bzw. der lichten Weite zwischen den Pflanzen **2** entspricht. Eine Führung der einzelnen Einheiten **4** entsprechend den Pflanzen **2** in den Pflanzenreihen erfolgt durch jeweils seitlich an den einzelnen Einheiten **4** vorgesehene Leiteinrichtungen bzw. Leitbleche **7,** wie dies insbesondere unter Bezugnahme auf **Fig. 6** und **7a** sowie **7b** nachfolgend im Detail erläutert werden wird.

Zu der nachfolgenden detaillierten Beschreibung wird einleitend angemerkt, dass in der Zeichnung jeweils nur die für das Verständnis der vorliegenden Erfindung wesentlichen Elemente im Detail beschrieben und mit Bezugszeichen versehen sind, um die Beschreibung und die Darstellungen entsprechend zu vereinfachen.

Aus der schematischen Teildarstellung gemäß **Fig. 2** ist ersichtlich, dass an dem Träger **3** ständig dargestellte Einheit **1** eine in dieser Figur nicht vollständig dargestellte Einheit **1** über mehrere Gelenkverbindungen gelagert ist, wobei mit **8** ein an dem Träger **3** festgelegtes Lager bezeichnet ist, welches über Parallelogrammlenker **9** mit einem Werkzeugträger **10** zusammenwirkt, wobei das Werkzeug sowie ein Werkzeughalter hierfür beispielsweise in **Fig. 5** und **6** im Detail dargestellt sind.

Der Werkzeugträger **10** ist über ein mit **11** bezeichnetes Tastrad an einer mit **12** bezeichneten Bodenoberfläche abgestützt, wobei zusätzliche Elemente für eine Höhenverstellung des Tastrads **11** allgemein mit **13** angedeutet sind. Durch eine Höhenversteilbarkeit des Tastrads **11** wird entsprechend eine verbleibende Höhe der zu entfernenden bzw. zu zerkleinernden Pflanzen zwischen den Pflanzenreihen einstellbar.

Für ein Anheben des Werkzeugträgers **10** und des damit verbundenen Werkzeugs bzw. Werkzeughalters, wie dies nachfolgend ersichtlich werden wird, ist aus **Fig. 2** zusätzlich ein Zylinder-Kolben-Aggregat **14** ersichtlich, über welches durch ein Ausfahren des Kolbens über die Parallelogrammlenker **9** durch ein Anheben des Werkzeugträgers **10** ein Anheben bzw. Entfernen des Tastrads **11** von der Bodenoberfläche **12** möglich wird.

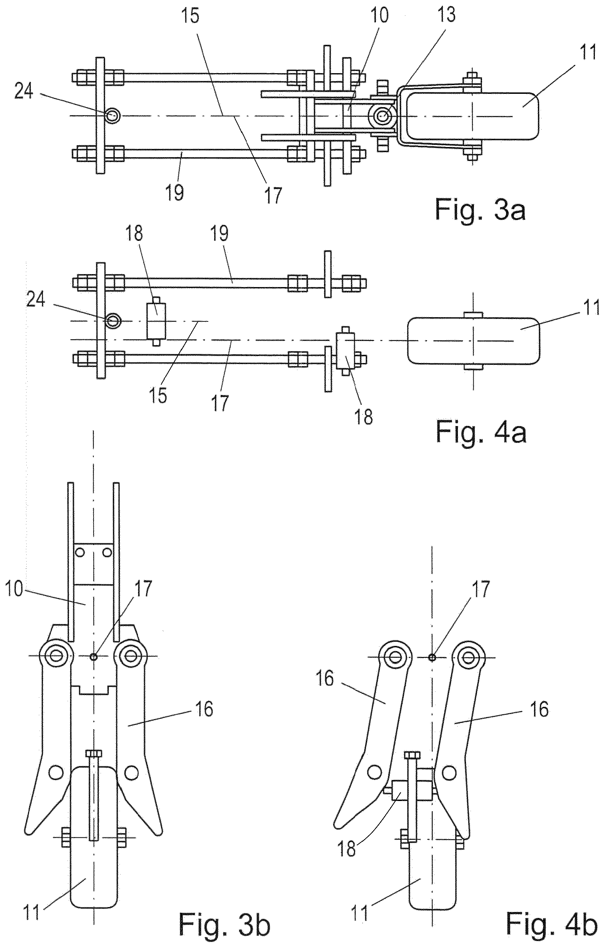

Aus den Darstellungen gemäß **Fig. 3a** und **3b** sowie **Fig. 4a** und **4b** ist ersichtlich, dass ein Verschwenken des Werkzeughalters **20** mit einer zentralen Achse **15** dadurch möglich ist, dass, wie dies insbesondere aus **Fig. 3b** und **4b** ersichtlich ist, an dem Werkzeugträger **10** Seitenpendel **16** vorgesehen sind, welche eine Verlagerung der gesamten Aufhängung des Werkzeughalters **20** sowie eines darin gelagerten Werkzeugs, wie dies nachfolgend deutlich ersichtlich werden wird, und somit um eine in **Fig. 4b** schematisch mit **17** bezeichnete Schwenkachse möglich machen, welche im Wesentlichen horizontal und in Richtung der Fahrtrichtung, wie sie in **Fig. 1** durch einen Pfeil X angedeutet ist, und in Richtung der Pflanzenreihen **2** verläuft.

Mit den Seitenpendeln **16,** wobei insbesondere in **Fig. 4a** und **4b** zusätzliche Zylinder **18** angedeutet sind, um eine Rückführung in eine zentrale bzw. mittige Lage, wie sie in **Fig. 3a** (zentrale Achse **15** ist überlappend mit der Schwenkachse **17)** gezeigt ist, zu ermöglichen, sind entsprechende Verlängerungen **19** gekoppelt, welche eine entsprechende Abstützung bzw. Halterung der in den nachfolgenden Figuren gezeigten Werkzeuge bzw. Werkzeughalter derselben ermöglichen.

Bei der schematischen Draufsicht gemäß **Fig. 5** ist ein Werkzeughalter **20** sowie schematisch mit **21** ein von einem Messer gebildetes Werkzeug gezeigt, wobei zusätzlich ein Motor **22** für einen Antrieb des Messers **21** für ein Entfernen und Zerkleinern von zwischen den Pflanzenreihen befindlichen, zu entfernenden Pflanzen, wie beispielsweise Unkraut, Untersaaten oder dgl. angedeutet ist.

Aus der Darstellung gemäß **Fig. 5** ist darüber hinaus ersichtlich, dass für eine Einstellung der Breite jeder allgemein mit **4** in **Fig. 1** bezeichneten Einheit der Werkzeughalter **20** mit teleskopierbaren Auszügen **23** versehen ist, welche entsprechend dem Doppelpfeil einstellbar sind, wobei entsprechende unterschiedliche Einstellungen in **Fig. 5** relativ zu dem Anlenkpunkt des Messers **21** unterschiedliche mögliche Breiten andeuten.

Neben einer zur Schwenkachse **17** versetzten Lage des Werkzeughalters 20 und somit des Messers **21** ähnlich der Darstellung gemäß **Fig. 4a** ist aus **Fig. 5** darüber hinaus eine Schrägstellung des Werkzeughalters 20 relativ zur Schwenkachse 17 insbesondere für eine Kurvenfahrt erkennbar, wobei eine derartige, in Fig. 5 gezeigte Verschwenkung um eine derartige im Wesentlichen vertikale Achse um einen schematisch mit 24 in Fig. 3a, 4a und 6 angedeuteten Dreh- bzw. Schwenkpunkt erfolgt.

Aus den Darstellungen gemäß Fig. 6 und 7a sowie 7b ist ersichtlich, dass an den Außenbereichen bzw. Außenumfängen jeder in Fig. 1 schematisch mit 4 bezeichneten Einheit Leiteinrichtungen 7 angeordnet sind, welche, wie dies insbesondere aus Fig. 7a und 7b ersichtlich ist, über eine Hebel- bzw. Schwenkverbindung 25 mit einer mit den teleskopierbaren Auszügen 23 und dadurch mit dem Werkzeughalter 20 gekoppelten Lagerstelle 26 schwenkbar gekoppelt sind.

Neben im Wesentlichen einwärts und aufwärts gebogenen Enden 27, welche eine einfache sowie die in Fig. 6 wiederum schematisch mit 2 bezeichneten Pflanzen schonende Führung der gesamten Einheiten 4 an den Pflanzen 2 ermöglichen, sind die Leiteinrichtungen bzw. Leitbleche 7 über die Schwenkverbindungen 25 relativ zu dem in Fig. 7a und 7b wiederum mit 21 bezeichneten Werkzeug bzw. Messer in der Höhenrichtung entsprechend dem angedeuteten Doppelpfeil verstellbar. Über diese Verstellbarkeit wird derart auch bei unebenen Bodenoberflächen eine Auflage der Leiteinrichtungen 7 im Wesentlichen über die gesamte Länge derselben und somit eine zuverlässige Führung an den Pflanzen 2 der Pflanzenreihen möglich.

Durch die mehrfach vorgesehene Verstellbarkeit bzw. teilweise Lenkbarkeit der einzelnen Einheiten 4 insbesondere durch eine Führung an den Pflanzen 2 der Pflanzenreihen kann somit die Breite b der einzelnen Einheiten 4 unmittelbar an den Abstand der Pflanzen 2 in den Pflanzenreihen angepasst werden und es kann auch bei einer gegebenenfalls nicht optimalen Positionierung des landwirtschaftlichen Fahrzeugs 5 relativ zu den Pflanzenreihen 2 durch die mehrfach vorgesehene Verstellbarkeit zuverlässig ein Entfernen und Zerkleinern von zwischen den Pflanzen 2 der Pflanzenreihen wachsenden, zu entfernenden bzw. zu zerkleinernden Pflanzen vorgenommen werden.

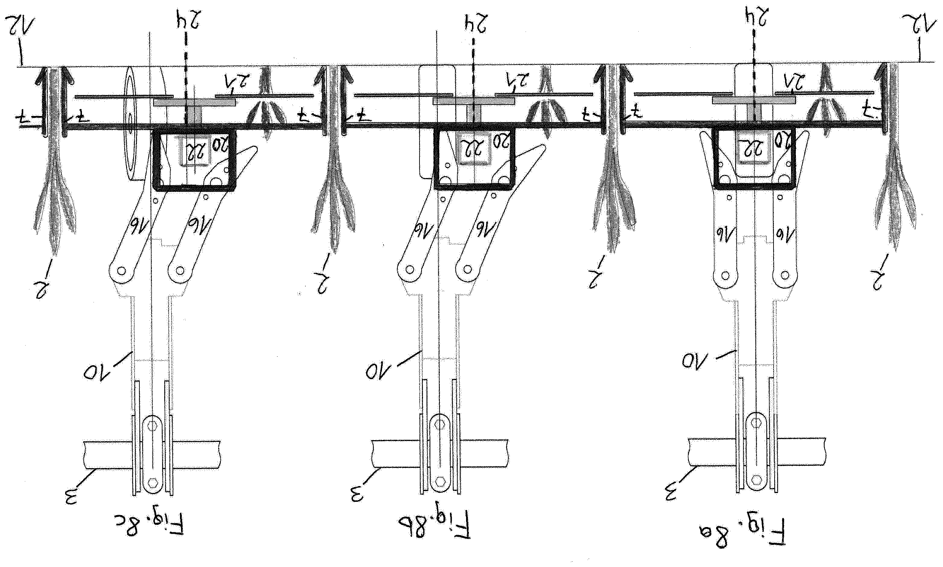

Fig. 8a zeigt eine an einem Traktor angeordnete Vorrichtung, welche parallel zu und zentral zwischen den Kulturpflanzenreihen fährt. Die automatische Anpassung des Werkzeugs erfolgt über die Leitbleche 7. Die Seitenpendel 16 sowie die vertikale Achse 24 lenken nicht aus.

Fig. 8b zeigt die Vorrichtung aus Fig. 8a, wobei diese parallel zu, jedoch nicht zentral zwischen den Kulturpflanzreihen fährt. Die automatische Anpassung des Werkzeugs erfolgt über die Leitbleche 7. Die Seitenpendel 16 lenken aus, die vertikale Achse 24 lenkt nicht aus.

Fig. 8c zeigt die Vorrichtung aus Fig. 8a, wobei diese nicht parallel zu und auch nicht zentral zwischen den Kulturpflanzenreihen fährt, d.h. eine Kurvenfahrt vollführt. Die automatische Anpassung des Werkzeugs erfolgt über die Leitbleche 7. Die Seitenpendel 16 sowie die vertikale Achse 24 lenken aus.

## Patentansprüche

1. Vorrichtung zum Entfernen und Zerkleinern, insbesondere Mulchen, von Unkraut, Untersaaten oder dgl. zwischen in Reihen angepflanzten Kulturpflanzen, mit einer Mehrzahl von einzelnen Pflanzenreihen zugeordneten Werkzeugen, welche an einem Träger (3) eines landwirtschaftlichen Fahrzeugs gelagert sind,
**dadurch gekennzeichnet, dass**
jeweils wenigstens ein Werkzeug (21), welche Werkzeuge (21) jeweils wenigstens ein rotierendes Messer (21) aufweisen, an oder in einem Werkzeughalter (20) gelagert ist, welcher Werkzeughalter (20) über eine vertikale Achse (24) und entsprechende Verlängerungen (19) und vorgesehene Seitenpendel (16) mit einem Werkzeugträger (10) verbunden und bewegbar an dem Werkzeugträger (10) angelenkt ist, wobei ein Verschwenken des Werkzeughalters (20) durch die an dem Werkzeugträger (10) vorgesehenen Seitenpendel (16), welche um eine im Wesentlichen horizontale und in Fahrtrichtung des Fahrzeugs (5) und in Richtung der im Wesentlichen parallel zueinander verlaufenden Pflanzenreihen orientierte Schwenkachse (17) verlagerbar geführt sind, ermöglicht wird, und wobei die Werkzeughalter (20) mittels seitlicher Leiteinrichtungen (7), insbesondere Leitbleche, an ihren Außenumfängen in Fahrtrichtung (X) des Fahrzeuges durch die Pflanzen (2) der Pflanzenreihen führbar sind.

2. Vorrichtung nach Anspruch 1, **dadurch gekennzeichnet, dass** die Leiteinrichtungen (7) zu dem zugehörigen Werkzeughalter (20) heb- und senkbar insbesondere zur Auflage an der Bodenoberfläche (12) angelenkt sind.

3. Vorrichtung nach Anspruch 1 oder 2, **dadurch gekennzeichnet, dass** die Leiteinrichtungen (7) an ihren in Fahrtrichtung vorderen Endbereichen mit im Wesentlichen einwärts zu einem mittigen Bereich des Werkzeughalters (20) sowie insbesondere aufwärts von der Bodenoberfläche (12) gerichteten Enden (27) ausgebildet sind.

4. Vorrichtung nach einem der Ansprüche 1 bis 3, **dadurch gekennzeichnet, dass** die Werkzeughalter (20) zusätzlich in vertikaler Richtung, vorzugsweise mittels eines Tastrades (11) zur Einhaltung eines im Wesentlichen vorbestimmten bzw. vorbestimmbaren Abstands zu der Bodenoberfläche (12) bewegbar sind.

5. Vorrichtung nach einem der Ansprüche 1 bis 4, **dadurch gekennzeichnet, dass** die Schwenkbewegungen bzw. Verlagerungsbewegungen der Werkzeughalter (20) über eine Mehrzahl von zwischen dem Träger (3) und jeweils einem Werkzeughalter der einzelnen Werkzeuge angeordneten Parallelogrammlenkern (9,16) gebildet sind.

6. Vorrichtung nach einem der Ansprüche 1 bis 5, **dadurch gekennzeichnet, dass** die Werkzeughalter (20) zusätzlich um eine im Wesentlichen vertikale Achse (24) verschwenkbar relativ zu dem Träger (3) gelagert sind.

7. Vorrichtung nach einem der Ansprüche 1 bis 6, **dadurch gekennzeichnet, dass** die Breite (b) der Werkzeughalter (20) in Fahrtrichtung (X) in Anpassung an einen Abstand zwischen einzelnen Pflanzenreihen eingestellt oder einstellbar ist.

8. Vorrichtung nach einem der Ansprüche 1 bis 7, **dadurch gekennzeichnet, dass** jeder Werkzeughalter (20) getrennt anhebbar und absenkbar an dem Träger (3), insbesondere unter Zwischenschaltung eines Zylinder-Kolben-Aggregats (14) gelagert ist.

9. Vorrichtung nach einem der Ansprüche 1 bis 8, **dadurch gekennzeichnet, dass** die Werkzeughalter (20) an einem in Fahrtrichtung (X) des landwirtschaftlichen Fahrzeugs (5) vor diesem angeordneten Träger (3) angeordnet bzw. festgelegt sind.

## Claims

1. Device for removing and crushing, in particular mulching, weeds, undersown crops or the like between crops planted in rows, with a plurality of tools associated with individual rows of plants, which are mounted on a carrier (3) of an agricultural vehicle,
**characterized in that**
at least one tool (21), which tools (21) each have at least one rotating blade (21), is mounted on or in a tool holder (20), which tool holder (20) is connected to a tool carrier (10) via a vertical axis (24) and corresponding extensions (19) and side pendulums (16) provided and is articulated movably on the tool carrier (10), pivoting of the tool holder (20) being prevented by the side pendulums (16) provided on the tool carrier (10), which are provided on the tool carrier (10) and which are displaceably guided about a substantially horizontal pivot axis (17) oriented in the direction of travel of the vehicle (5) and in the direction of the rows of plants extending substantially parallel to one another, and wherein the tool holders (20) can be guided by means of lateral guide devices (7), in particular guide plates, at their outer peripheries in the direction of travel (X) of the vehicle through the plants (2) of the rows of plants.

2. Device according to claim 1, **characterized in that** the guiding devices (7) are articulated to the associated tool holder (20) so as to be raisable and lowerable, in particular for resting on the ground surface (12).

3. Device according to claim 1 or 2, **characterized in that** the guide devices (7) are formed at their front end regions in the direction of travel with ends (27) directed substantially inwards towards a central region of the tool holder (20) and in particular upwards from the ground surface (12).

4. Device according to one of the claims 1 to 3, **characterized in that** the tool holders (20) are additionally movable in vertical direction, preferably by means of a feeler wheel (11) for maintaining a substantially predetermined or predeterminable distance to the floor surface (12).

5. Device according to one of claims 1 to 4, **characterized in that** the pivoting movements or displacement movements of the tool holders (20) are formed via a plurality of parallelogram links (9, 16) arranged between the carrier (3) and a respective tool holder of the individual tools.

6. Device according to one of claims 1 to 5, **characterized in that** the tool holders (20) are additionally mounted so as to be pivotable about a substantially vertical axis (24) relative to the carrier (3).

7. Device according to one of the claims 1 to 6, **characterized in that** the width (b) of the tool holders (20) in the direction of travel (X) is set or adjustable in adaptation to a distance between individual rows of plants.

8. Device according to one of the claims 1 to 7, **characterized in that** each tool holder (20) is separately liftable and lowerable mounted on the carrier (3), in particular with the interposition of a cylinder-piston unit (14).

9. Device according to one of claims 1 to 8, **characterized in that** the tool holders (20) are arranged or fixed on a carrier (3) arranged in front of the agricultural vehicle (5) in the direction of travel (X) of the latter.

## Revendications

1. Dispositif pour enlever et broyer, en particulier pour pailler, des mauvaises herbes, des sous-semis ou similaires entre des plantes de culture plantées en lignes, avec une pluralité d'outils associés à des lignes de plantes individuelles, qui sont montés sur un support (3) d'un véhicule agricole,
**caractérisé en ce que**
au moins un outil (21), lesquels outils (21) présentent chacun au moins une lame rotative (21), est monté sur ou dans un porte-outil (20), lequel porte-outil (20) est relié à un porte-outil (10) par l'intermédiaire d'un axe vertical (24) et de prolongements (19) correspondants et de pendules latéraux (16) prévus et est articulé de manière mobile sur le porte-outil (10), un pivotement du porte-outil (20) étant assuré par les pendules latéraux (16) prévus sur le porte-outil (10), qui sont guidés de manière à pouvoir être déplacés autour d'un axe de pivotement (17) essentiellement horizontal et orienté dans la direction de déplacement du véhicule (5) et dans la direction des rangées de plantes s'étendant essentiellement parallèlement les unes aux autres, et dans lequel les porte-outils (20) peuvent être guidés au moyen de dispositifs de guidage latéraux (7), notamment de tôles de guidage, sur leurs périphéries extérieures dans la direction de déplacement (X) du véhicule, à travers les plantes (2) des rangées de plantes.

2. Dispositif selon la revendication 1, **caractérisé en ce que** les dispositifs de guidage (7) sont articulés de manière à pouvoir être soulevés et abaissés par rapport au porte-outil (20) correspondant, en particulier pour s'appuyer sur la surface du sol (12).

3. Dispositif selon la revendication 1 ou 2, **caractérisé en ce que** les dispositifs de guidage (7) sont conçus, au niveau de leurs zones d'extrémité avant dans le sens de la marche, avec des extrémités (27) orientées sensiblement vers l'intérieur par rapport à une zone centrale du porte-outil (20) ainsi que, en particulier, vers le haut par rapport à la surface du sol (12).

4. Dispositif selon l'une des revendications 1 à 3, **caractérisé en ce que** les porte-outils (20) sont en outre mobiles dans la direction verticale, de préférence au moyen d'une roue de palpage (11), pour maintenir une distance sensiblement prédéterminée ou prédéterminable par rapport à la surface du sol (12).

5. Dispositif selon l'une des revendications 1 à 4, **caractérisé en ce que** les mouvements de pivotement ou de déplacement des porte-outils (20) sont formés par une pluralité de bras en parallélogramme (9, 16) disposés entre le support (3) et respectivement un porte-outil des différents outils.

6. Dispositif selon l'une des revendications 1 à 5, **caractérisé en ce que** les porte-outils (20) sont en outre montés pivotants par rapport au support (3) autour d'un axe (24) sensiblement vertical.

7. Dispositif selon l'une des revendications 1 à 6, **caractérisé en ce que** la largeur (b) des porte-outils (20) dans le sens de déplacement (X) est réglée ou réglable en fonction d'une distance entre des rangées de plantes individuelles.

8. Dispositif selon l'une des revendications 1 à 7, **caractérisé en ce que** chaque porte-outil (20) est monté sur le support (3) de manière à pouvoir être soulevé et abaissé séparément, notamment par l'intermédiaire d'un ensemble cylindre-piston (14).

9. Dispositif selon l'une des revendications 1 à 8, **caractérisé en ce que** les porte-outils (20) sont disposés ou fixés sur un support (3) disposé devant le véhicule agricole (5) dans le sens de la marche (X) de celui-ci.
